# FASCICULE DE BREVET EUROPEEN

(11) **EP 3 181 345 B1**
(45) Date de publication et mention de la délivrance du brevet: **02.05.2018**
(21) Numéro de dépôt: 17150352.7
(22) Date de dépôt: 07.03.2008
(51) Int. Cl.: B32B 1/08, B32B 27/34, F16L 11/04, B32B 27/32, F16L 11/08, C08L 77/02, C08K 5/00, C08L 23/08, C08L 51/06, C08L 77/00, C08K 5/435

(54) **UTILISATION D'UNE COMPOSITION A BASE DE POLYAMIDE POUR DES TUYAUX FLEXIBLES DESTINES A VEHICULER DU PETROLE OU DU GAZ ET TUYAU FLEXIBLE A BASE D'UNE TELLE COMPOSITION**
EINSATZ EINER ZUSAMMENSETZUNG AUF POLYAMIDBASIS FÜR SCHLÄUCHE, DURCH DIE ERDÖL ODER GAS FLIESSEN SOLL, UND SCHLÄUCHE AUS EINER SOLCHEN ZUSAMMENSETZUNG
USE OF A POLYAMIDE-BASED COMPOSITION FOR HOSES INTENDED FOR CARRYING OIL OR GAS AND HOSE MADE OF SUCH A COMPOSITION

(30) Priorité: 07.03.2007 FR 0753687; 26.04.2007 US 914195 P
(43) Date de publication de la demande: 21.06.2017
(62) Demande divisionnaire de: 08775692.0
(73) Titulaire: Arkema France, 92700 Colombes (FR)
(72) Inventeur: HOCHSTETTER, Gilles, 94240 L'HAY LES ROSES (FR); FINE, Thomas, 200135, Shanghai (CN); DANG, Patrick, 27300 SAINT- LEGER- DE - ROTES (FR); HUGON, Lionel, 27300 MENNEVAL (FR)

(56) Documents cités:
- EP-A- 0 731 308
- EP-A- 1 625 887
- WO-A-86/06397
- WO-A1-95/35347
- CN-Y- 2 752 789
- US-A1- 2002 147 272
- US-A1- 2004 058 113

## Description

L'invention se rapporte à l'utilisation d'une composition à base de polyamide pour la fabrication de tuyaux flexibles destinés à véhiculer du pétrole ou du gaz, en particulier pour la fabrication de tuyaux flexibles utilisés dans l'exploitation des gisements de pétrole ou de gaz sous la mer (offshore).

L'invention se rapporte également à un tuyau flexible destiné à véhiculer du pétrole ou du gaz, ce tuyau comprenant au moins une couche obtenue à partir de la composition à base de polyamide mentionnée ci-avant.

L'exploitation de gisements pétroliers situés en mer soumet à des conditions extrêmes les matériaux mis en oeuvre, et en particulier les tuyaux reliant les différents dispositifs autour de la plate-forme et véhiculant les hydrocarbures extraits, qui sont généralement transportés à haute température (de l'ordre de 135°C) et haute pression (par exemple, 700 bars).

Lors du fonctionnement des installations, il se pose donc des problèmes aigus de résistance mécanique, thermique et chimique des matériaux mis en oeuvre. De tels tuyaux doivent en particulier résister au pétrole chaud, au gaz, à l'eau et aux mélanges d'au moins deux de ces produits pendant des durées pouvant atteindre 20 ans.

De manière classique, ces tuyaux comprennent une couche intérieure métallique non étanche formée par une bande en métal profilée enroulée en hélice telle qu'un feuillard agrafé. Cette couche intérieure métallique, qui donne la forme au tuyau, est revêtue, en général par extrusion, d'une couche de polymère destinée à conférer l'étanchéité. D'autres couches de protection et/ou de renfort telles que des nappes de fibres métalliques et des caoutchoucs peuvent également être disposées autour de la couche de polymère étanche.

Pour des températures de service en dessous de 40°C, le polymère est du HDPE (polyéthylène haute densité). Pour des températures comprises entre 40°C et 90°C, on utilise du polyamide et, pour des températures supérieures à 90°C, on met en oeuvre du PVDF (polyfluorure de vinylidène).

Compte tenu du coût élevé du PVDF, et malgré l'implication de températures plus élevées que celles préconisées, le choix du polymère s'est porté sur les polyamides, tels que le PA11 et le PA12, bien connus pour leur bonne tenue thermique, leur résistance chimique, notamment aux solvants, leur résistance aux intempéries et aux rayonnements, leur imperméabilité aux gaz et aux liquides et leur qualité d'isolants électriques.

Ces polyamides sont déjà couramment utilisés pour la fabrication de tuyaux destinés à véhiculer des hydrocarbures extraits de gisements pétroliers situés sous la mer (offshore) ou non (on-shore) mais présentent toutefois l'inconvénient de vieillir trop vite.

Pour remédier à cet inconvénient et donc améliorer la résistance au vieillissement de ces tuyaux à base de polyamide, le document US 2003/0220449, au nom de la Demanderesse, propose une composition comprenant :
- de 70 à 96 % en poids d'au moins un polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90 % de motifs 11 soit plus de 90 % de motifs 12,
- de 4 à 10 % d'un plastifiant, et
- de 0 à 25 % d'un élastomère choisi parmi le caoutchouc nitrile butadiène (NBR) et le caoutchouc nitrile butadiène hydrogéné (H-NBR), la somme des quantités de plastifiant et d'élastomère étant comprise entre 4 et 30 %.

La mise en oeuvre d'un élastomère du type NBR ou H-NBR dans les compositions décrites dans le document US 2003/0220449 présente plusieurs avantages par rapport aux compositions antérieures uniquement à base de polyamide et de plastifiant.

En particulier, l'introduction de l'un ou l'autre de ces élastomères permet d'augmenter de manière significative la résistance au vieillissement des tuyaux flexibles comprenant une telle couche, notamment en limitant la teneur pondérale en plastifiant.

Toutefois, les élastomères NBR et H-NBR ont un coût élevé. Cet aspect économique a nécessairement un impact sur le coût global des compositions contenant de tels élastomères, malgré la réduction significative de la quantité de plastifiant.

Par ailleurs, ces élastomères NBR et H-NBR sont commercialisés sous forme de boules ou de chips. Cette présentation impose donc, pour la préparation de la composition, de mettre en oeuvre une étape préliminaire consistant à transformer, par exemple par broyage, ces boules ou chips pour les soumettre, sous une forme plus adaptée, à l'étape ultérieure de compoundage, au moyen d'une extrudeuse notamment.

La mise en oeuvre de ces élastomères impose donc une contrainte supplémentaire dans le procédé de préparation de la composition thermoplastique, qui impose un outillage et au moins une étape de transformation supplémentaire. De tels aménagements ajoutent également un surcoût à celui déjà engendré par la matière première NBR ou H-NBR.

La présente invention vise donc l'utilisation d'une composition à base de polyamide pour la fabrication de tuyaux flexibles destinés à véhiculer du pétrole ou du gaz, notamment dans le domaine de l'offshore, cette composition présentant au moins les mêmes avantages que ceux obtenus par la mise en oeuvre de la composition décrite dans le document US 2003/0220449, en particulier l'amélioration de la résistance au vieillissement des tuyaux flexibles de l'art antérieur, mais remédiant également au moins à l'un des inconvénients économiques identifiés, à savoir le choix d'une matière première moins onéreuse et/ou ne nécessitant pas d'étape de mise en oeuvre industrielle supplémentaire, nécessairement coûteuse. US 2004/0058113 décrit un tuyau flexible utilisé dans des applications off shore, comprenant dans cet ordre: (i) une couche intérieure formée d'au moins un polymère thermoplastique (A), (ii) éventuellement une couche de liant de coextrusion, et (iii) une couche de polyoléfine.
Le polymère thermoplastique (A) peut être constitué d'un mélange d'une polyamide et d'une polyoléfine ayant une matrice polyamide, le dit polyamide étant choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11, soit plus de 90% de motifs 12. Des polyoléfines fonctionnalisées anhydride ou acide par greffage ou copolymérisation utilisés dans la composition du polymère (A) sont spécifiés, en particulier des copolymères EPR, éthylène/ butène et éthylène/(méth)acrylate. La composition comprend également des plastifiants, dont notamment du BBSA, préférentiellement dans une proportion de 5-20% en poids pour 70-100% de résine polyamide.

Selon l'invention, le but est atteint par l'utilisation, pour la fabrication de tuyaux flexibles destinés à véhiculer du pétrole ou du gaz, et plus particulièrement pour la fabrication de tuyaux flexibles utilisés dans l'exploitation des gisements de pétrole ou de gaz sous la mer (offshore), d'une composition comprenant :
- de 70 à 91 % en poids d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
- de 5 à 25 % en poids d'une polyoléfine fonctionnalisée, c'est-à-dire d'une polyoléfine comprenant une fonction époxy, anhydride ou acide, introduite par greffage ou par copolymérisation, et
- de 4 à 20 % en poids d'un plastifiant.

L'expression "polyamide semi-cristallin" couvre les homopolyamides ainsi que les copolyamides qui présentent à la fois une température de transition vitreuse Tg et une température de fusion Tf.

Sont notamment visés par l'expression "polyamides semi-cristallins" les homopolyamides aliphatiques qui résultent de la condensation :
- d'un lactame,
- d'un acide alpha,omega-aminocarboxylique aliphatique,
- d'une diamine aliphatique et d'un diacide aliphatique.

Parmi les polyamides semi-cristallins, on peut notamment citer, à titre d'exemple et de façon non limitative, les polyamides suivants : le PA9, le PA11, le PA12, le PA6.12 et le PA10.10.

Sont également visés par l'expression "polyamides semi-cristallins", les homopolyamides semi-aromatiques qui résultent de la condensation :
- d'une diamine aliphatique et d'un diacide aromatique, tel que l'acide téréphtalique (T) et l'acide isophtalique (I). Les polyamides obtenus sont alors couramment appelés "polyphtalamides" ou PPA ;
- d'une diamine aromatique, telle que la xylylènediamine, et plus particulièrement la métaxylylènediamine (MXD) et d'un diacide aliphatique.

Ainsi, et de manière non limitative, on peut citer le polyamide MXD.10.

Comme indiqué précédemment, l'expression "polyamides semi-cristallins" couvre également les copolyamides, qui résultent de la condensation d'au moins deux des groupes de composés énoncés ci-dessus pour l'obtention d'homopolyamides.

Ainsi, les copolyamides couvrent notamment les produits de condensation :
- d'au moins deux lactames,
- d'au moins deux acides alpha,omega-aminocarboxyliques aliphatiques,
- d'au moins un lactame et d'au moins un acide alpha,omega-aminocarboxylique aliphatique,
- d'au moins deux diamines et d'au moins deux diacides,
- d'au moins un lactame avec au moins une diamine et au moins un diacide,
- d'au moins un acide alpha,omega-aminocarboxylique aliphatique avec au moins une diamine et au moins un diacide,
la(les) diamine(s) et le(s) diacide(s) pouvant être, indépendamment l'un de l'autre, aliphatiques, cycloaliphatiques ou aromatiques.

Parmi les copolyamides, on peut notamment citer le copolyamide 11/10.T et le copolyamide 12/10.T.

Le polyamide semi-cristallin, qu'il soit un homopolyamide aliphatique, cycloaliphatique ou aromatique, ou encore un copolyamide, présente un nombre d'atomes de carbone par atome d'azote supérieur à 7,5, avantageusement compris entre 9 et 18 et préférentiellement entre 10 et 18.

Dans le cas d'un homopolyamide de type PA-X.Y, le nombre d'atomes de carbone par atome d'azote est la moyenne du motif X et du motif Y.

Dans le cas d'un copolyamide, le nombre de carbone par azote se calcule selon le même principe. Le calcul est réalisé au prorata molaire des différents motifs amides.

La composition mise en oeuvre dans le cadre de la présente invention comprend au moins un polyamide semi-cristallin, c'est-à-dire qu'elle peut comprendre un mélange de deux ou plusieurs des polyamides semi-cristallins parmi les polyamides cristallins répondant à la définition indiquée ci-dessus.

En particulier, on peut avantageusement envisager l'utilisation d'une composition comprenant du copolyamide 11/10.T et/ou du copolyamide 12/10.T, en mélange avec du PA11 et/ou du PA12.

Avantageusement, l'invention vise l'utilisation d'une composition comprenant :
- de 70 à 91 % en poids d'au moins un polyamide choisi parmi le PA11, le PA12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90 % de motifs 11 soit plus de 90 % de motifs 12,
- de 5 à 25 % en poids d'une polyoléfine fonctionnalisée, et
- de 4 à 20 % en poids d'un plastifiant.

Dans une version avantageuse de l'invention, la polyoléfine est un copolymère élastomère de l'éthylène.

De préférence, ce copolymère élastomère de l'éthylène est choisi parmi un copolymère éthylène/propylène (EPR), un copolymère éthylène/butylène et un copolymère éthylène/(meth)acrylate d'alkyle.

En termes de coût, les polyoléfines fonctionnalisées, notamment les copolymères élastomères à base d'éthylène, comme ceux mentionnés ci-dessus, et en particulier l'EPR, en plus d'être moins onéreux que l'élastomère NBR ou le H-NBR, sont de mise en oeuvre aisée. Ils n'exigent pas d'étape préalable de mise en forme et peuvent être compoundés directement.

La présente invention se rapporte également à un tuyau flexible destiné à véhiculer du pétrole ou du gaz, en particulier à un tuyau flexible destiné à être utilisé pour l'exploitation des gisements de pétrole ou de gaz sous la mer (offshore).

Selon l'invention, le tuyau flexible comprend au moins une couche obtenue à partir d'une composition comprenant :
- de 70 à 91 % en poids d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
- de 5 à 25 % en poids d'une polyoléfine comprenant une fonction époxy, anhydride ou acide, introduite par greffage ou par copolymérisation, la polyoléfine étant avantageusement un copolymère élastomère de l'éthylène, ce copolymère élastomère de l'éthylène étant de préférence choisi parmi un copolymère éthylène/propylène (EPR), un copolymère éthylène/butylène et un copolymère éthylène/(méth)acrylate d'alkyle, et
- de 4 à 20 % en poids, de préférence de 5 à 13 % en poids, d'un plastifiant.

On se reportera à ce qui a été décrit précédemment pour le polyamide semi-cristallin.

Avantageusement, le tuyau flexible comprend au moins une couche obtenue à partir d'une composition comprenant :
- de 70 à 91 % en poids d'au moins un polyamide choisi parmi le PA11, le PA12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90 % de motifs 11, soit plus de 90 % de motifs 12,
- de 5 à 25 % en poids d'une polyoléfine comprenant une fonction époxy, anhydride ou acide, introduite par greffage ou par copolymérisation, la polyoléfine étant avantageusement un copolymère élastomère de l'éthylène, ce copolymère élastomère de l'éthylène étant de préférence choisi parmi un copolymère éthylène/propylène (EPR), un copolymère éthylène/butylène et un copolymère éthylène/(méth)acrylate d'alkyle, et
- de 4 à 20 % en poids, de préférence de 5 à 13 % en poids, d'un plastifiant.

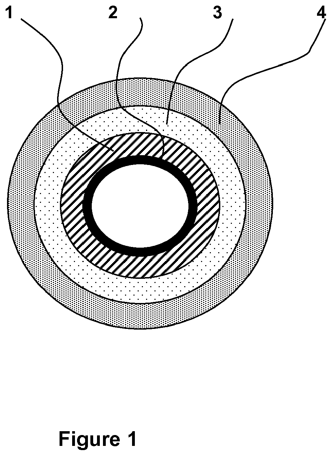

La description qui va suivre est donnée à titre d'illustration non limitative de l'invention et est faite en partie en référence à la figure 1 qui est une représentation schématique en coupe d'un exemple de réalisation d'un tuyau flexible conforme à la présente invention.

La présente invention se rapporte donc à l'utilisation, pour la fabrication de tuyaux flexibles destinés à véhiculer du pétrole ou du gaz, d'une composition spécifique, cette composition comprenant :
- de 70 à 91 % en poids d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18, ce polyamide semi-cristallin étant avantageusement choisi parmi le PA11, le PA12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90 % de motifs 11 soit plus de 90 % de motifs 12,
- de 5 à 25 % en poids d'un copolymère élastomère d'éthylène comprenant une fonction époxy, anhydride ou acide, introduite par greffage ou par copolymérisation, et
- de 4 à 20 % en poids d'un plastifiant.

Le polyamide mis en oeuvre dans le cadre de la présente invention peut notamment présenter une masse moléculaire moyenne en nombre *M̅n̅* en général supérieure ou égale à 25000 et avantageusement comprise entre 40000 et 100000. Sa masse moléculaire moyenne en poids *M̅w̅* est en général supérieure à 40000 et avantageusement comprise entre 50000 et 100000 ; elle peut aller jusqu'à 200000. Sa viscosité inhérente (mesurée à 20°C pour un échantillon de 5.10⁻³ g/cm³ de méta-crésol) est en général supérieure à 0,7, de préférence supérieure à 1,2.

A titre d'exemples de polyamide aliphatique résultant de la condensation d'une diamine aliphatique ayant de 6 à 12 atomes de carbone et d'un diacide aliphatique ayant de 9 à 12 atomes de carbone, on peut citer
- le PA 6-12 résultant de la condensation de l'hexaméthylènediamine et de l'acide 1,12-dodécanedioïque,
- le PA 9-12 résultant de la condensation de la diamine en C9 et de l'acide 1,12-dodécanedioïque,
- le PA 10-10 résultant de la condensation de la diamine en C10 et de l'acide 1,10-décanedioïque,
- le PA 10-12 résultant de la condensation de la diamine en C10 et de l'acide 1,12-dodécanedioïque.

Les copolyamides 11/12, ayant soit plus de 90 % de motifs 11, soit plus de 90 % de motifs 12, résultent de la condensation de l'acide amino 1-undécanoïque avec le lauryllactame (ou l'alpha omégaaminoacide en C12).

On ne sortirait pas du cadre de l'invention en utilisant un mélange de deux ou plusieurs polyamides semi-cristallins, et notamment des polyamides et copolyamides décrits ci-dessus.

Le polyamide est de préférence le PA 11 ou le PA 12.

La composition utilisée dans le cadre de la présente invention comprend de 70 à 91 % en poids d'au moins un polyamide semi-cristallin, le polyamide étant avantageusement choisi parmi ceux mentionnés ci-dessus.

Plus préférentiellement, cette teneur en polyamide(s) est comprise entre 75 à 87 % en poids du poids total de la composition.

Avantageusement, le polyamide contient un catalyseur, qui peut être organique ou minéral, et qui est ajouté au cours de la polycondensation. De préférence, ce catalyseur est choisi parmi l'acide phosphorique et l'acide hypophosphorique. Selon une version avantageuse de l'invention, la quantité de catalyseur représente jusqu'à 3000 ppm, et de préférence entre 50 et 1000 ppm, par rapport à la quantité de polyamide(s).

On entend par polyoléfine, un polymère comprenant des motifs oléfines tels que, par exemple, des motifs éthylène, propylène, butène, octène ou tout autre alpha oléfine.

A titre d'exemple, on peut citer :
- les polyéthylènes tels que les LDPE, HDPE, LLDPE ou VLDPE, le polypropylène ou encore les polyéthylènes métallocènes ;
- les copolymères de l'éthylène tels que les copolymères éthylène/propylène, les terpolymères éthylène/propylène/diène ; et
- les copolymères de l'éthylène avec au moins un produit choisi parmi les sels ou esters d'acides carboxyliques insaturés et les esters vinyliques d'acides carboxyliques saturés.

Dans une version particulièrement avantageuse de l'invention, la polyoléfine est un copolymère élastomère de l'éthylène.

Un tel copolymère élastomère d'éthylène est un composé obtenu à partir d'au moins deux monomères distincts dont au moins un monomère d'éthylène.

De préférence, ce copolymère élastomère d'éthylène est choisi parmi un copolymère éthylène/propylène (EPR), un copolymère éthylène/butylène et un copolymère éthylène/(méth)acrylate d'alkyle.

Le copolymère éthylène/propylène (EPR) est un copolymère élastomère bien connu, obtenu à partir de monomères d'éthylène et de propylène. L'EPR ou EPM, est notamment décrit dans l'ouvrage Ullmann's Encyclopedia of Industrial Chemistry, 5e édition, Vol A 23, des pages 282 à 288, le contenu étant incorporé dans la présente demande.

Le copolymère éthylène/butylène est obtenu à partir de monomères d'éthylène et de butène-1.

Le copolymère éthylène/(méth)acrylate d'alkyle est obtenu par polymérisation radicalaire de l'éthylène et de (méth)acrylate d'alkyle. Le méth(acrylate) d'alkyle est de préférence choisi parmi le (méth)acrylate de méthyle, l'acrylate d'éthyle, l'acrylate de n-butyle, l'acrylate d'isobutyle, l'acrylate d'octyle et l'acrylate de 2-éthylhexyle.

La polyoléfine utilisée dans le cadre de la présente invention est fonctionnalisée dans le sens où elle comprend au moins une fonction époxy, anhydride ou acide, cette fonction étant introduite par greffage ou par copolymérisation.

La polyoléfine fonctionnalisée peut notamment être choisie parmi les copolymères éthylène/alpha oléfines, fonctionnalisés et les copolymères éthylène/(méth)acrylate d'alkyle fonctionnalisés.

La polyoléfine fonctionnalisée peut également être choisie parmi :
- les copolymères de l'éthylène, d'un époxyde insaturé et éventuellement d'un ester ou un sel d'acide carboxylique insaturé ou d'un ester vinylique d'acide carboxylique saturé. Ce sont, par exemple, les copolymères éthylène/acétate de vinyle/(méth)acrylate de glycidyle ou les copolymères éthylène/(méth)acrylate d'alkyle/(méth)acrylate de glycidyle,
- les copolymères de l'éthylène, d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont, par exemple, les copolymères éthylène/acétate de vinyle/anhydride maléique, les copolymères éthylène/(méth)acrylate d'alkyle/anhydride maléique ou encore les copolymères éthylène/(méth)acrylate de Zn ou Li/anhydride maléique.

La densité de la polyoléfine fonctionnalisée peut avantageusement être comprise entre 0,86 et 0,965.

De manière avantageuse, la polyoléfine est fonctionnalisée par un anhydride d'acide carboxylique.

Plus préférentiellement, la polyoléfine fonctionnelle est choisie parmi un copolymère éthylène/propylène (EPR) greffé anhydride maléique, un copolymère éthylène/butylène greffé anhydride maléique et un copolymère éthylène/(méth)acrylate d'alkyle comprenant une fonction anhydride maléique.

A titre d'exemple de copolymère éthylène/(méth)acrylate d'alkyle comprenant une fonction anhydride maléique, on peut citer les terpolymères de l'éthylène, d'acrylate d'alkyle et d'anhydride maléique, notamment commercialisés par la Demanderesse sous la dénomination commerciale Lotader®.

La composition utilisée dans le cadre de la présente invention comprend de 5 à 25 % en poids, avantageusement de 8 à 15%, de préférence de 8 à 12 % en poids, d'au moins une polyoléfine fonctionnelle.

On ne sortirait pas du cadre de l'invention si cette composition comprenait un mélange d'au moins une polyoléfine fonctionnelle et d'au moins une polyoléfine non fonctionnelle, c'est-à-dire ne comprenant aucune fonction.

Il est ainsi envisageable d'introduire jusqu'à 80 % en poids de polyoléfine(s) non fonctionnelle(s) dans ce mélange d'au moins une polyoléfine fonctionnelle et d'au moins une polyoléfine non fonctionnelle.

A titre d'exemple, cela peut correspondre à un mélange entre un copolymère éthylène/(méth)acrylate d'alkyle comprenant une fonction anhydride maléique, introduite par greffage ou copolymérisation, et un copolymère éthylène/(méth)acrylate d'alkyle.

Plus préférentiellement, cette teneur en polyoléfine(s) fonctionnelle(s), comprenant le cas échéant une ou plusieurs polyoléfines non fonctionnelles, est comprise entre 8 à 12 % en poids du poids total de la composition.

Le plastifiant est choisi parmi les dérivés de benzène sulfonamide, tels que le n-butyl benzène sulfonamide (BBSA) ; l'éthyl toluène sulfonamide ou le N-cyclohexyl toluène sulfonamide ; les esters d'acides hydroxy-benzoïques, tels que le parahydroxybenzoate d'éthyl-2-hexyle et le parahydroxybenzoate de décyl-2-hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tel que l'oligoéthylèneoxy malonate.

On ne sortirait pas du cadre de l'invention en utilisant un mélange de plastifiants.

Le plastifiant particulièrement préféré est le n-butyl benzène sulfonamide (BBSA).

Le plastifiant peut être introduit dans le polyamide pendant la polycondensation ou ultérieurement.

La composition utilisée dans le cadre de la présente invention comprend de 4 à 20 % en poids d'au moins un plastifiant parmi ceux mentionnés ci-dessus.

Plus préférentiellement, cette teneur en plastifiant(s) est comprise entre 5 à 13 % en poids du poids total de la composition.

La composition peut en outre comprendre au moins un additif choisi parmi les modifiants chocs, ces modifiants chocs ne répondant de préférence pas à la définition des polyoléfines fonctionnelles décrite ci-dessus, les colorants, les pigments, les azurants, les anti-oxydants et les stabilisants UV.

Ces produits sont connus en eux-mêmes et utilisés habituellement dans les compositions à base de polyamide.

Parmi les modifiants chocs, on peut notamment citer les charges, minérales ou organiques, les caoutchoucs et les composés coeur-écorce ou "core-shell" tels que décrits dans le document "Plastics Additives : An A-Z Reference, published in 1998 by Chapman & Hall, London ; Impacts modifiers : (2) Modifiers for engineering thermoplastics, C.A. Cruz, Jr" ou le document "Antec, 2002 Plastics : Annual Technical Conference, volume 3 : Specila Areas - Additives and Modifiers-, Novel Acrylic, weatherable impact modifiers with excellent low temperature impact performance, Claude Granel & Michael Tran" . Comme composés coeur-écorce utilisable, on peut citer, ceux à coeur élastomérique en polymère réticulé à base d'acrylate de butyle et à écorce dure en poly(méthacrylate de méthyle).

La quantité de ces additifs peut représenter jusqu'à 5 % en poids, et avantageusement entre 0,5 et 2 % en poids, du poids total de la composition comprenant le(s) polyamide(s), le plastifiant et la polyoléfine fonctionnelle, en particulier le copolymère élastomère d'éthylène fonctionnalisé.

Dans une version avantageuse de l'invention, la composition ne comprend pas d'épaississant de polyamide du type du composé (D) décrit au paragraphe [0038] du document US 2002/0147272.

La composition utilisée dans le cadre de la présente invention est préparée par mélange, à l'état fondu, des différents constituants dans tout dispositif de mélange, et de préférence une extrudeuse.

La composition est le plus souvent récupérée sous forme de granulés.

La présente invention va maintenant être illustrée par des exemples de différentes compositions dont l'utilisation fait l'objet de la présente invention ainsi que par différentes structures de tuyaux flexibles, également conformes à l'objet de la présente invention.

**Matériaux utilisés**

| | |
|---|---|
| PA 11 : | polyamide 11 de densité 1,030g/cm³ et viscosité inhérente ISO = 1,35dL/g, produit sous la référence BESNO par la société ARKEMA FRANCE |
| BBSA : | N-butyl benzène sulfonamide (plastifiant) commercialisé par la société PROVIRON |
| *Stab* : | système d'additifs stabilisants anti-oxydants et UV |
| Exxelor VA 1803 : | copolymère éthylène/propylène fonctionnalisé par de l'anhydride maléique de densité 0,86 g/cm³ et de MFI (10kg/230°C) = 22 commercialisé par la société EXXON. |
| Exxelor VA 1801 : | copolymère éthylène/propylène fonctionnalisé par de l'anhydride maléique de densité 0,87 g/cm³ et de MFI (10kg/230°C) = 9 commercialisé par la société EXXON. |
| NIPOL CGX 1072 : | copolymère statistique NBR acrylonitrile (19%)/butadiène de densité = 0,98g/cm³ et de viscosité Mooney = 45 ± 5 ML (1+4) 100°C commercialisé par la société ZEON FRANCE. |

### Préparation des compositions

Dans le cadre des essais numérotés 1 à 5, cinq compositions distinctes ont été préparées.

Dans l'essai 2, correspondant à une composition de l'art antérieur puisque comprenant du NBR, ce NBR est préalablement broyé après refroidissement à l'azote liquide sur concasseur LANCELIN® (pré-broyage sur grille de 16 mm puis reprise sur grille de 6 mm) en présence d'un agent anti-mottant (stéarate de calcium).

Lors de l'utilisation des copolymères élastomères d'éthylène, cette étape préalable n'est pas nécessaire car ces copolymères sont tous disponibles sous forme de granulés.

Les produits sont compoundés en extrudeuse bi-vis co-rotative de type WERNER® 40 (L/D = 40). Cette extrudeuse comprend 10 zones numérotées de F1 à F9 et la filière. La zone d'alimentation F1 n'est pas chauffée et on adopte un profil de températures plat à 270°C pour l'ensemble des autres zones.

Le polyamide, le copolymère élastomère et l'additif *Stab* sont introduits en zone F1 sous forme d'un mélange à sec (dry-blend) par l'intermédiaire de deux doseurs pondéraux séparés.

Le plastifiant (BBSA) est introduit par une pompe doseuse en zone F6-7. Le dégazage sous vide relatif de 360 mm Hg est effectué en zone F4.

Le débit d'extrusion en sortie de la filière est de 80 kg/h pour une vitesse de rotation des vis de 300 rpm (tours par minute). Le jonc est granulé après refroidissement dans un bac à eau. Les granulés des différents essais 1 à 5 sont alors séchés à 80°C durant 12 heures et conditionnés en sacs étanches après vérification des taux d'humidités (% eau inférieur ou égal à 0,08 %).

Dans le tableau 1 ci-après, sont rassemblées les informations relatives aux différents composés et leur pourcentage pondéral respectif dans les compositions des essais 1 à 5, ainsi qu'à certains paramètres relevés lors de l'extrusion (températures T en tête, pressions P en tête, couple). Le vide est régulé de manière à ce que la pression en tête soit constante d'un essai à l'autre et comprise entre 20 et 24 bars.

**Tableau 1**

| **Essais** | **1** | **2** | **3** | **4** | **5** |
|---|---|---|---|---|---|
| **PA11 (%)** | 86,8 | 83,4 | 79,4 | 83,4 | 83,4 |
| **BBSA (%)** | 12 | 6 | 6 | 6 | 6 |
| **NBR (%)** | 0 | 10 | 0 | 0 | 0 |
| **Exxelor VA1803 (%)** | 0 | 0 | 14 | 10 | 0 |
| **Exxelor VA1801 (%)** | 0 | 0 | 0 | 0 | 10 |
| ***Stab* (%)** | 1,2 | 0,6 | 0,6 | 0,6 | 0,6 |
| **T en tête (°C)** | 274 | 277 | 275 | 275 | 277 |
| **P en tête (bars)** | 20 | 20 | 23 | 23 | 23 |
| **Couple (%)** | 70 | 81 | 89 | 77 | 80 |

Le taux de plastifiant a été diminué dans les essais 2 à 5 par rapport à celui de l'essai 1 afin de maintenir un niveau comparable de module déterminé en traction pour l'ensemble des essais 1 à 5.

Les granulés des essais 1 à 5 sont ensuite extrudés sous forme d'échantillons, qui se présentent soit sous la forme de bandes, soit sous la forme de tubes.

Les bandes de 6 mm d'épaisseur sont préparées par extrusion-calandrage. L'extrudeuse est de type AMUT® (L/D = 32, D = 70 mm) et fonctionne avec un profil de température plat à 220°C. La calandre est de type AMUT® dotée de 5 rouleaux dont les températures respectives (°C) sont 45-45-60-20-20.

Les tubes sont préparés sur une ligne d'extrusion-tube Samafor. Le diamètre des tubes est de 90 mm. Le profil de températures utilisé est le suivant : 170-200-210-230°C.

De manière à réaliser la caractérisation des matériaux, des éprouvettes sont découpées, soit dans la bande extrudée, soit dans l'épaisseur du tube extrudé.

Pour réaliser les tests de fatigue, des éprouvettes axisymétriques de diamètre 4 mm sont découpées dans l'épaisseur circulaire du tube. Ces éprouvettes axisymétriques sont ensuite entaillées perpendiculairement à leur axe d'un rayon d'entaille de 4 mm.

Pour les mesures de température de transition ductile-fragile, des barreaux sont usinés dans la bande : longueur supérieure à 50 mm, largeur de 10 mm et épaisseur : celle de la bande.

### Description des méthodes de caractérisation des matériaux

### Test de vieillissement

On réalise ce test en immergeant les éprouvettes obtenues à partir des compositions des essais 1 à 5 dans de l'eau à pH 7, inertée à l'azote U pour éliminer les traces d'oxygène, à 140°C en autoclave, pendant plusieurs jours, notamment pendant 7 jours.

### Mesure de la température de transition ductile-fragile (TDF)

Pour la mesure de la température de transition ductile-fragile (TDF), on réalise des essais de rupture en flexion entaillée en suivant un protocole dérivé du test de la norme ISO 179 1eA.

Ce protocole a été adapté pour être plus sévère que celui de ladite norme, en ce sens que l'entaille est réalisée à l'aide d'une lame de rasoir et présente donc un rayon de fond d'entaille plus petit que la valeur de 0,25 mm préconisée dans cette norme. L'épaisseur des barreaux utilisée est également plus importante que celle des barreaux préconisés dans la norme (6 ou 7 mm typiquement contre 4 mm). Sur 10 barreaux, on procède par dichotomie par pas de 5°C, pour encadrer la TDF. Celle-ci correspond à 50 % de rupture fragile. La vitesse d'impact prise en référence est de 10 mm/min (selon les normes OMAE2007 - 26th International Conference on Offshore Mechanics and Artic Engineering, San Diego, 10-15 juin 2007-, DEPOS 19 de 2004 -13-15 octobre 2004, Poitiers, Etude de la Transmission Ductile Fragile du Polyamide 11 Soumis à un Vieillissement Hydrolytique, Nicolas Amouroux et al. GFP2004).

Les résultats obtenus sont rassemblés dans le tableau 2 ci-dessous.

**Tableau 2**

| **Essais** | **TDF [°C]** |
|---|---|
| **1** | 12 |
| **2** | -14 |
| **3** | -21 |
| **4** | -10 |
| **5** | -10 |

Les barreaux obtenus à partir des compositions des essais 4 et 5, conformes à l'invention, présentent une température de transition ductile-fragile proche bien que légèrement supérieure à celle obtenue avec les barreaux préparés à partir de la composition décrite dans le document US 2003/0220449.

Ces compositions sont en outre plus économiques et sont plus faciles à mettre en oeuvre ("processabilité") que la composition décrite dans le document US 2003/0220449.

La composition 3 présente en particulier un avantage en termes de mise en oeuvre ("processabilité"), coût et résistance mécanique.

Sur la figure 1, on a représenté une vue schématique en coupe d'un tuyau flexible destiné à véhiculer du pétrole ou du gaz.

Ce tube comprend au moins une couche 1 obtenue à partir d'une composition telle que décrite précédemment et comprenant de 70 à 91 % en poids d'au moins un polyamide, de 5 à 25 % en poids d'un copolymère élastomère et de 4 à 20 % en poids d'un plastifiant, le polyamide et le copolymère élastomère étant tels que définis ci-dessus.

Ce tube comprend en outre au moins une deuxième couche 2 qui peut être constituée d'un ou plusieurs éléments métalliques. De manière classique, cette deuxième couche 2 est formée par une bande en métal profilée enroulée en hélice.

Cette deuxième couche 2 est destinée à être en contact avec le pétrole ou le gaz véhiculé. La couche 1 est disposée autour de la deuxième couche 2 de manière à assurer l'étanchéité.

Dans la réalisation représentée à la figure 1, le tube comprend également une troisième couche 3 disposée autour de la couche 1.

Cette troisième couche 3, qui est de préférence réalisée en métal ou en matériau composite, permet de compenser la pression interne du pétrole ou du gaz véhiculé et d'éviter ainsi une déformation trop importante du tuyau.

Autour de la troisième couche 3 du tube représenté à la figure 1, est disposée une quatrième couche 4 de protection.

Dans d'autres variantes de tubes conformes à l'invention, qui ne sont pas représentées sur la figure 1, on pourrait envisager les structures suivantes :
- un tube qui ne serait formé que de la couche 1 et de la deuxième couche 2,
- un tube qui comprendrait une couche 1, une deuxième couche 2 et une quatrième couche 4 de protection disposée autour de la couche 1.

Bien évidemment, pour des raisons de résistance mécanique, thermique et/ou chimique, on peut également envisager de réaliser des tubes comprenant plusieurs couches 1, plusieurs deuxièmes couches 2, plusieurs troisièmes couches 3 et/ou plusieurs quatrièmes couches 4 de protection.

## Revendications

1. Utilisation d'une composition comprenant
- de 70 à 91 % en poids, de préférence de 75 à 87 % en poids, d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
- de 5 à 25 % en poids, avantageusement de 8 à 15%, de préférence de 8 à 12 % en poids, d'une polyoléfine comprenant une fonction époxy, anhydride ou acide, introduite par greffage ou par copolymérisation, et
- de 4 à 20 % en poids, de préférence de 5 à 13 % en poids, d'un plastifiant,
pour la fabrication de tuyaux flexibles utilisés dans l'exploitation des gisements de pétrole ou de gaz sous la mer (offshore).

2. Utilisation selon la revendication 1, **caractérisée en ce que** le polyamide semi-cristallin est choisi parmi le PA11, le PA12, les polyamides aliphatiques résultant de la condensation d'une diamine aliphatique ayant de 6 à 12 atomes de carbone et d'un diacide aliphatique ayant de 9 à 12 atomes de carbone, les copolyamides 11/12 ayant soit plus de 90 % de motifs 11 soit plus de 90 % de motifs 12 et les polyphtalamides.

3. Utilisation selon la revendication 1 ou 2, **caractérisée en ce que** la polyoléfine est un copolymère élastomère de l'éthylène, de préférence choisi parmi un copolymère éthylène/propylène (EPR), un copolymère éthylène/butylène et un copolymère éthylène/(méth)acrylate d'alkyle.

4. Utilisation selon l'une quelconque des revendications 1à 3, **caractérisée en ce que** le plastifiant est le N-butyl benzène sulfonamide (BBSA).

5. Utilisation selon l'une quelconque des revendications 1 à 4, **caractérisée en ce que** le polyamide contient un catalyseur, de préférence choisi parmi l'acide phosphorique et l'acide hypophosphorique.

6. Utilisation selon la revendication 5, **caractérisée en ce que** la quantité de catalyseur représente jusqu'à 3000 ppm, et de préférence entre 50 et 1000 ppm, par rapport à la quantité de polyamide.

7. Utilisation selon l'une quelconque des revendications 1 à 6, **caractérisée en ce que** la composition comprend en outre au moins un additif choisi parmi les modifiants chocs, les colorants, les pigments, les azurants, les anti-oxydants et les stabilisants UV.

## Patentansprüche

1. Verwendung einer Zusammensetzung, umfassend:
- 70 bis 91 Gew.-%, vorzugsweise 75 bis 87 Gew.-%, mindestens eines teilkristallinen Polyamids, das eine durchschnittliche Zahl von Kohlenstoffatomen pro Stickstoffatom Nc größer oder gleich 7,5, vorteilhafterweise zwischen 9 und 18 und vorzugsweise zwischen 10 und 18, aufweist,
- 5 bis 25 Gew.-%, vorteilhafterweise 8 bis 15 Gew.-%, vorzugsweise 8 bis 12 Gew.-%, eines Polyolefins mit einer Epoxid-, Anhydrid- oder Säurefunktion, die durch Pfropfung oder Copolymerisation eingeführt wird, und
- 4 bis 20 Gew.-%, vorzugsweise 5 bis 13 Gew.-%, eines Weichmachers,
zur Herstellung von Schläuchen, die bei der Förderung von Öl- oder Gasvorkommen unter dem Meer (Offshore) verwendet werden.

2. Verwendung nach Anspruch 1, **dadurch gekennzeichnet, dass** das teilkristalline Polyamid aus PA11, PA12, aliphatischen Polyamiden, die sich aus der Kondensation eines aliphatischen Diamins mit 6 bis 12 Kohlenstoffatomen und einer aliphatischen Disäure mit 9 bis 12 Kohlenstoffatomen ergeben, Copolyamiden 11/12 mit entweder mehr als 90 % 11-Einheiten oder mehr als 90 % 12-Einheiten und Polyphthalamiden ausgewählt ist.

3. Verwendung nach Anspruch 1 oder 2, **dadurch gekennzeichnet, dass** es sich bei dem Polyolefin um ein elastomeres Ethylen-Copolymer handelt, das vorzugsweise aus einem Ethylen/Propylen-Copolymer (EPR), einem Ethylen/Butylen-Copolymer und einem Ethylen/Alkyl(meth)acrylat-Copolymer ausgewählt ist.

4. Verwendung nach einem der Ansprüche 1 bis 3, **dadurch gekennzeichnet, dass** es sich bei dem Weichmacher um N-Butylbenzolsulfonamid (BBSA) handelt.

5. Verwendung nach einem der Ansprüche 1 bis 4, **dadurch gekennzeichnet, dass** das Polyamid einen Katalysator enthält, der vorzugsweise aus Phosphorsäure und Hypophosphorsäure ausgewählt ist.

6. Verwendung nach Anspruch 5, **dadurch gekennzeichnet, dass** die Katalysatormenge bis zu 3000 ppm und vorzugsweise zwischen 50 und 1000 ppm, bezogen auf die Menge an Polyamid, ausmacht.

7. Verwendung nach einem der Ansprüche 1 bis 6, **dadurch gekennzeichnet, dass** die Zusammensetzung außerdem mindestens ein Additiv, das aus Schlagzähigkeitsmodifikatoren, Farbstoffen, Pigmenten, Aufhellern, Antioxidantien und UV-Stabilisatoren ausgewählt ist, umfasst.

## Claims

1. Use of a composition comprising:
- from 70 to 91% by weight, preferably from 75 to 87% by weight, of at least one semicrystalline polyamide having an average number of carbon atoms per nitrogen atom, denoted by Nc, greater than or equal to 7.5, advantageously between 9 and 18 and preferably between 10 and 18;
- from 5 to 25% by weight, advantageously from 8 to 15% and preferably from 8 to 12% by weight, of a polyolefin comprising an epoxy, anhydride or acid functional group, introduced by grafting or by copolymerization; and
- from 4 to 20% by weight, preferably from 5 to 13% by weight, of a plasticizer,
- for manufacturing flexible pipes used in the exploitation of offshore oil or gas deposits.

2. Use according to Claim 1, **characterized in that** the semicrystalline polyamide is chosen from PA-11, PA-12, aliphatic polyamides resulting from the condensation of an aliphatic diamine having from 6 to 12 carbon atoms and an aliphatic diacid having from 9 to 12 carbon atoms, copolyamides PA-11/12 having either more than 90% of PA-11 units or more than 90% of PA-12 units and polyphthalamides.

3. Use according to Claim 1 or 2, **characterized in that** the polyolefin is an elastomeric ethylene copolymer, preferably chosen from an ethylene/ propylene copolymer (EPR), an ethylene/butylene copolymer and an ethylene/alkyl (meth)acrylate copolymer.

4. Use according to any one of Claims 1 to 3, **characterized in that** the plasticizer is N-butylbenzenesulphonamide (BBSA).

5. Use according to any one of Claims 1 to 4, **characterized in that** the polyamide contains a catalyst, preferably chosen from phosphoric acid and hypophosphoric acid.

6. Use according to Claim 5, **characterized in that** the amount of catalyst represents up to 3000 ppm, and preferably between 50 and 1000 ppm, relative to the amount of polyamide.

7. Use according to any one of Claims 1 to 6, **characterized in that** the composition comprises, in addition, at least one additive chosen from impact modifiers, dyes, pigments, brighteners, antioxidants and UV stabilizers.
